# EUROPEAN PATENT APPLICATION

(11) **EP 4 723 303 A1**
(43) Date of publication of application: **08.04.2026**
(21) Application number: 25762317.3
(22) Date of filing: 07.02.2025
(51) Int. Cl.: H01M 10/625, H01M 10/6554, H01M 50/289, H01M 50/249, H01M 50/271, B60K 1/04, B60L 50/64

(54) **MULTI-LAYER PACK STRUCTURE FOR HEAVY DUTY APPLICATIONS**

(30) Priority: 29.02.2024 US 202463559502 P; 21.01.2025 US 202519032576
(71) Applicant: LG Energy Solution, Ltd., Seoul 07335 (KR)
(72) Inventor: JONES, Matthew, Waterford, Michigan 48327 (US); YANG, Heekook, Sterling Heights, Michigan 48313 (US); DAHITULE, Atish, Sterling Heights, Michigan 48310 (US)
(74) Representative: Plasseraud IP
(86) International application number: PCT/KR2025/001826
(87) International publication number: WO 2025/183383

(57) **Abstract**

A vehicle battery pack assembly includes a plurality of sub pack assemblies, each sub pack including a box frame. An internal frame assembly is disposed within the box frame. The box frame includes a front wall, a rear wall and a pair of side walls, one of the front wall and the rear wall includes a first plurality of mounting flanges vertically spaced there along and the pair of sidewalls each include a second plurality of mounting flanges vertically spaced there along. The internal frame assembly includes a plurality of first cold plate structures mounted directly to at least one of the first and second plurality of mounting flanges. A thermal hose assembly is connected to each of the plurality of first cold plate structures and a plurality of battery modules are supported on the plurality of first cold plate structures.

## Description

### CROSS-REFERENCE TO RELATED APPLICATIONS

This application claims the benefit of U.S. Provisional Application No.63/557,502, filed on 02/29/2024 and U.S. Non-Provisional Application No. 19/032,576, filed on 01/21/2025. The entire disclosure of the above application is incorporated herein by reference.

### FIELD

The present disclosure relates to a battery pack, and more particularly to a multi-layer battery pack structure with integrated cold plates for heavy duty vehicle applications.

### BACKGROUND

This section provides background information related to the present disclosure which is not necessarily prior art.

Electric vehicles are becoming increasingly popular as a more environmentally friendly alternative to traditional combustion engine vehicles. Electric vehicles offer significant potential for reducing greenhouse gas emissions and mitigating climate change impacts compared to conventional internal combustion engine vehicles. The environmental benefits of electric vehicles may be particularly pronounced for heavy duty applications like trucks and buses, which typically consume large amounts of fossil fuels and produce substantial emissions during operation. Battery pack design plays an important role in realizing the climate mitigation potential of electric heavy-duty vehicles. Optimizing factors like energy density, thermal management, and longevity can help maximize the practical range and usable lifespan of these vehicles.

A key component of electric vehicles is the battery pack, which provides the energy storage and power delivery necessary for vehicle operation. As electric vehicles are developed for heavy duty applications like trucks and buses, there is a growing need for battery pack designs that can meet the increased power and energy requirements of these larger vehicles.

Heavy duty electric vehicles present unique challenges for battery pack design. The battery packs must be able to store and deliver much larger amounts of energy compared to passenger vehicles. At the same time, there are constraints on the size, weight, and packaging of the battery pack within the vehicle frame. Optimizing the energy density and power capability of the battery pack while working within these constraints is critical.

Thermal management is another important consideration for heavy duty electric vehicle battery packs. The high-power demands can generate significant heat within the battery cells and modules. Effective cooling is necessary to maintain battery performance and longevity. Integrating thermal management systems like cold plates into the battery pack structure in an efficient manner is an ongoing area of development.

The mechanical structure and mounting of the battery pack is also crucial for heavy duty applications. The pack must be able to withstand the increased vibration, shock, and other mechanical stresses associated with heavy vehicle operation. At the same time, the mounting system needs to allow for serviceability and potential battery swapping.

Most of current electric vehicle battery application structures have a wide flat one layer and partially two-layer cells/modules for car/light truck. Heavy duty trucks commonly use a multiple sub pack stack-up. The multiple stacked sub pack structure for heavy duty trucks adds more weight and utilizes more space which create less efficiency in terms of energy density. Further, internal stacking of battery structures can cause more difficult processes for replacing or performing maintenance on battery pack components.

### SUMMARY

This section provides a general summary of the disclosure, and is not a comprehensive disclosure of its full scope or all of its features.

The present disclosure relates to a structure intended to address packing space considerations by minimizing internal frame clearances as well as the outer enclosure boundary thereby allowing for more rechargeable energy storage space. Generally, the structure disclosed herein comprises an integrated cold plate assembly and housing interface which serves to provide excellent structural support for the assembly while reducing the mass of the assembly.

According to an aspect of the present disclosure, a vehicle battery pack assembly includes a plurality of sub pack assemblies, each sub pack including a box frame. An internal frame assembly is disposed within the box frame. The box frame includes a front wall, a rear wall and a pair of side walls, one of the front wall and the rear wall includes a first plurality of mounting flanges vertically spaced there along and the pair of sidewalls each include a second plurality of mounting flanges vertically spaced there along. The internal frame assembly includes a plurality of first cold plate structures mounted directly to at least one of the first and second plurality of mounting flanges. A thermal hose assembly is connected to each of the plurality of first cold plate structures and a plurality of battery modules are supported on the plurality of first cold plate structures.

According to a further aspect, the internal frame assembly further comprises a plurality of front vertical support brackets extending along the front wall and a plurality of rear vertical support brackets extending along the rear wall of the box frame and a plurality of support beams extending between respective ones of the plurality of front vertical support brackets and the plurality of rear vertical support brackets.

According to a further aspect, the plurality of first cold plate structures are connected to at least one of the plurality of support beams.

According to a further aspect, the internal frame includes a top plate mounted to an upper portion of the box frame.

According to a further aspect, a plurality of second cold plate structures are disposed on the top plate.

According to a further aspect, a second plurality of battery modules are disposed on the plurality of second cold plate structures.

According to a further aspect, a plurality of covers are disposed over the second plurality of battery modules.

According to a further aspect, the plurality of first cold plate structures include a structural plate and a cold plate secured to the structural plate.

According to a further aspect, the structural plate includes a plurality of alignment pins and the cold plate includes a plurality of apertures that receive the alignment pins.

According to a further aspect, the structural plate includes a plurality of mounting features for mounting to the first plurality of mounting flanges and the second plurality of mounting flanges.

According to another aspect, a vehicle can be provided with the vehicle battery pack assembly mounted to a pair of frame rails of a frame structure of a vehicle.

Further areas of applicability will become apparent from the description provided herein. The description and specific examples in this summary are intended for purposes of illustration only and are not intended to limit the scope of the present disclosure.

### DRAWINGS

The drawings described herein are for illustrative purposes only of selected embodiments and not all possible implementations, and are not intended to limit the scope of the present disclosure.
FIG. 1 is a top plan view of a heavy duty truck frame and battery pack assembly according to the principles of the present disclosure;
FIG. 2 is a perspective view of the battery pack assembly according to the principles of the present disclosure;
FIG. 3 is a front plan view with the front panel removed of an example sub pack of the battery pack assembly according to the principles of the present disclosure;
FIG. 4 is a perspective view of a box frame of the sub pack according to the principles of the present disclosure;
FIG. 5 is a perspective view of the internal frame of the sub pack according to the principles of the present disclosure;
FIG. 6 is an exploded perspective view of the exemplary sub-pack according to the principles of the present disclosure;
FIGS. 7A-7P show a step-by-step assembly process for an example sub-pack of the rechargeable energy storage system of a heavy-duty vehicle according to the principles of the present disclosure;
FIG. 8 is an exploded perspective view of the cold plate structural assembly of the sub-pack of the rechargeable energy storage system of a heavy-duty vehicle according to the principles of the present disclosure;
FIG. 9 is an exploded perspective view of cold plate structural assembly according to the principles of the present disclosure;
FIG. 10 is a perspective view of a pair of cold plate structural assemblies according to the principles of the present disclosure;
FIG. 11 is a perspective view of a pair of cold plate structural assemblies and structural beams according to the principles of the present disclosure;
FIG. 12 is a detailed perspective view of the assembly of the cold plate structural assemblies and structural beams according to the principles of the present disclosure;
FIG. 13 is a perspective view of the thermal hose assembly according to the principles of the present disclosure;
FIG. 14 is a perspective view of the top plate assembly and the mounting beam assemblies according to the principles of the present disclosure;
FIG. 15 is a perspective view of the end of the mounting beam with mounting bolts for the mounting plate;
FIG. 16 is a perspective view of the mounting plate and mounting bolt shown being assembled to the mounting beam;
FIG. 17 is a schematic view of the sub pack showing details of the mounting beam assemblies for mounting the sub pack to the vehicle frame rails.

Corresponding reference numerals indicate corresponding parts throughout the several views of the drawings.

### DETAILED DESCRIPTION

Example embodiments will now be described more fully with reference to the accompanying drawings.

Example embodiments are provided so that this disclosure will be thorough, and will fully convey the scope to those who are skilled in the art. Numerous specific details are set forth such as examples of specific components, devices, and methods, to provide a thorough understanding of embodiments of the present disclosure. It will be apparent to those skilled in the art that specific details need not be employed, that example embodiments may be embodied in many different forms and that neither should be construed to limit the scope of the disclosure. In some example embodiments, well-known processes, well-known device structures, and well-known technologies are not described in detail.

The terminology used herein is for the purpose of describing particular example embodiments only and is not intended to be limiting. As used herein, the singular forms "a," "an," and "the" may be intended to include the plural forms as well, unless the context clearly indicates otherwise. The terms "comprises," "comprising," "including," and "having," are inclusive and therefore specify the presence of stated features, integers, steps, operations, elements, and/or components, but do not preclude the presence or addition of one or more other features, integers, steps, operations, elements, components, and/or groups thereof. The method steps, processes, and operations described herein are not to be construed as necessarily requiring their performance in the particular order discussed or illustrated, unless specifically identified as an order of performance. It is also to be understood that additional or alternative steps may be employed.

When an element or layer is referred to as being "on," "engaged to," "connected to," or "coupled to" another element or layer, it may be directly on, engaged, connected or coupled to the other element or layer, or intervening elements or layers may be present. In contrast, when an element is referred to as being "directly on," "directly engaged to," "directly connected to," or "directly coupled to" another element or layer, there may be no intervening elements or layers present. Other words used to describe the relationship between elements should be interpreted in a like fashion (e.g., "between" versus "directly between," "adjacent" versus "directly adjacent," etc.). As used herein, the term "and/or" includes any and all combinations of one or more of the associated listed items.

Although the terms first, second, third, etc. may be used herein to describe various elements, components, regions, layers and/or sections, these elements, components, regions, layers and/or sections should not be limited by these terms. These terms may be only used to distinguish one element, component, region, layer or section from another region, layer or section. Terms such as "first," "second," and other numerical terms when used herein do not imply a sequence or order unless clearly indicated by the context. Thus, a first element, component, region, layer or section discussed below could be termed a second element, component, region, layer or section without departing from the teachings of the example embodiments.

Spatially relative terms, such as "inner," "outer," "beneath," "below," "lower," "above," "upper," "front", "rear", "left", "right" and the like, may be used herein for ease of description to describe one element or feature's relationship to another element(s) or feature(s) as illustrated in the figures. Spatially relative terms may be intended to encompass different orientations of the device in use or operation in addition to the orientation depicted in the figures. For example, if the device in the figures is turned over, elements described as "below" or "beneath" other elements or features would then be oriented "above" the other elements or features. Thus, the example term "below" can encompass both an orientation of above and below. The device may be otherwise oriented (rotated 90 degrees or at other orientations) and the spatially relative descriptors used herein interpreted accordingly.

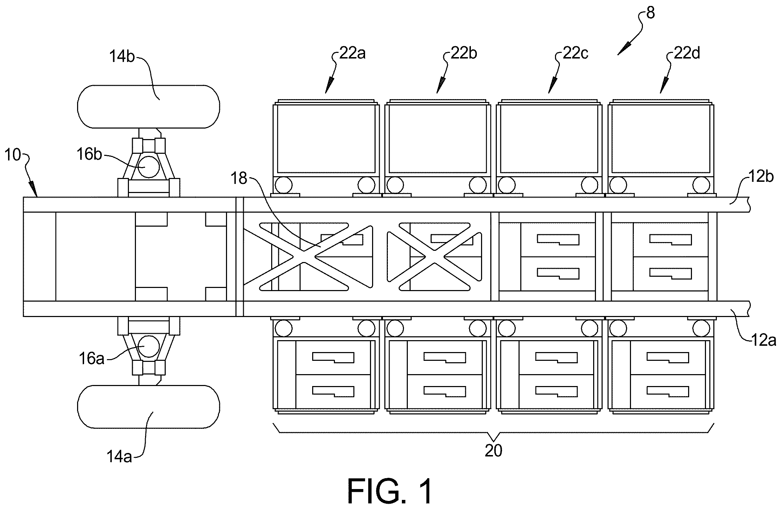

With reference to FIG. 1, a vehicle frame structure 10 of a vehicle 8 is shown including a pair of frame rails 12a, 12b. A pair of wheels 14a, 14b are shown mounted to a pair of suspension arms 16a, 16b that are pivotably mounted to the frame structure 10. Electric motors can be supported for driving selected wheels of the vehicle, as is known in the art. The electric motors can drive the wheels direct or through a transmission of the vehicle. The vehicle drivetrain can include a hybrid drive system for allowing the wheels to be driven by an engine and/or electric motors. The frame structure 10 can include a cross-support structure 18 that is connected to each of the frame rails 12a, 12b.

A rechargeable energy storage system in the form of a battery pack 20 can be supported by the frame structure 10. In particular, the battery pack can include a plurality of sub packs 22a-22d that are each mounted to the pair of frame rails 12a, 12b. In the example embodiment shown, four sub packs are provided, although more or fewer sub packs can be utilized. The battery pack 20 provides electricity to the vehicle electric motors. The sub packs 22a-22d are mounted side-by-side longitudinally along the pair of frame rails 12a, 12b. The sub packs can be identical to one another or can have different arrangements, as desired for specific applications.

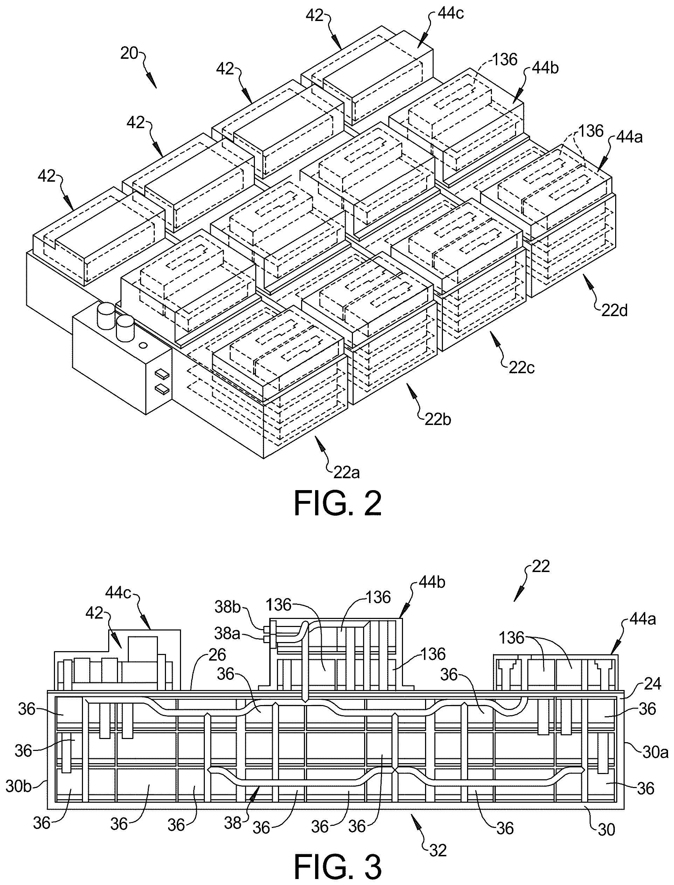

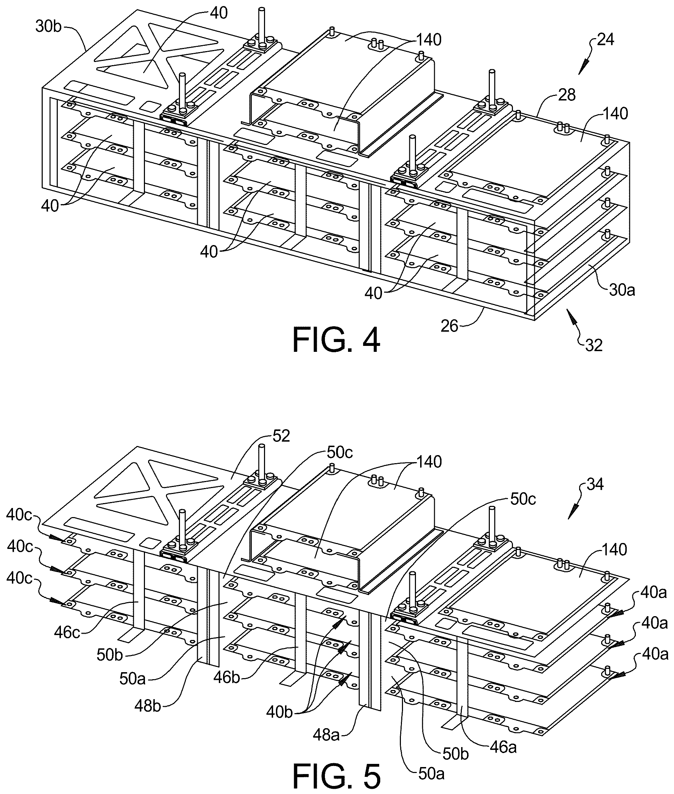

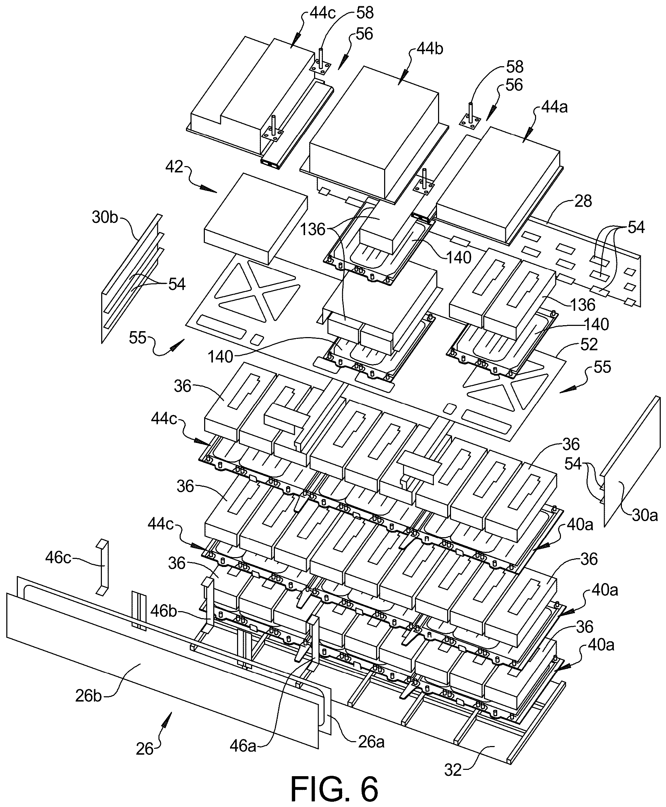

With reference to FIG. 2, the battery pack 20 is shown separate from the frame structure 10. The battery pack 20, as shown, includes four sub packs 22a-22d that are longitudinally aligned relative to a direction of movement of the vehicle. With reference to FIG. 3 and 4 each sub pack 22a-22d includes a box frame 24 having a front wall 26, a rear wall 28, a pair of sidewalls 30a, 30b and a base 32. FIG. 3 shows the box frame 24 with the front wall 26 removed to show an internal frame assembly 34 that supports the battery modules 36. The front wall 26 is shown in the exploded perspective view of FIG. 6.

In some cases, each sub pack 22a, 22b, 22c, 22d may include additional components. For example, a battery control unit 42 may be mounted on top of the box frame 24. The battery pack 20 may also include one or more additional battery modules 136 positioned on top of the box frame 24. For example, as shown in FIG. 4, additional battery modules 136 are stacked on top of the box frame 24 with two battery modules 136 being shown on the right side and three battery modules 136 being stacked in the middle. It should be understood that a location and number of the additional battery modules 136 can be varied based upon a desired application. In addition, a location of the battery control unit 42 can also be varied based upon a desired application. Battery pack 20 may further include a plurality of covers to protect and enclose various components. In some cases, these covers may include a side cover 44a, a center cover 44b, and another cover 44c. The covers 44a, 44b, 44c may be positioned over additional battery modules 136 and the battery control unit 42.

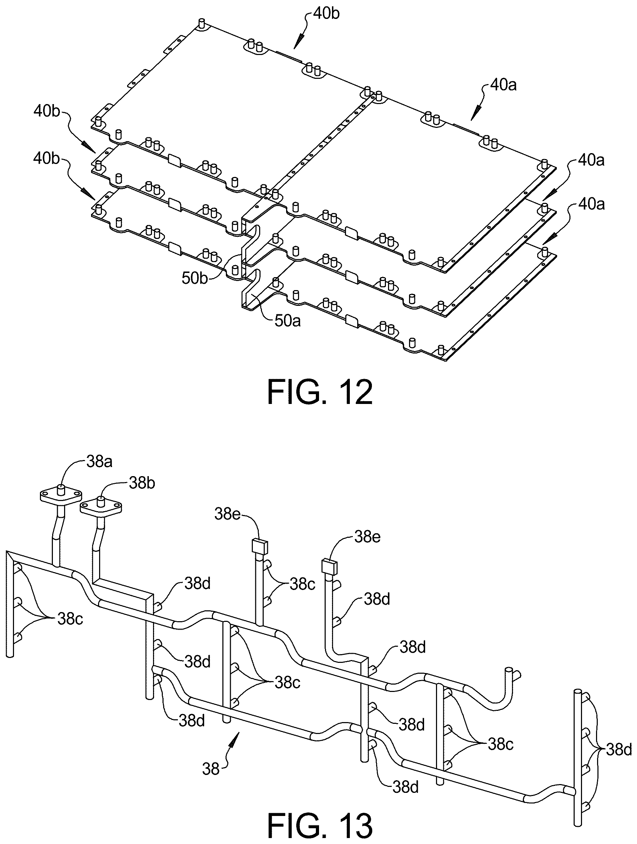

A thermal hose assembly 38 (best shown in FIG. 13) is connected to cold plate structures 40 that make up part of the internal frame assembly 34, as will be described in greater detail herein. The additional battery modules 136 on top of the box frame 24 are each supported by an additional cold plate structure 140. The thermal hose assembly 38 is also connected to the additional cold plate structures 140 on top of the box frame 24. As shown in FIG. 3, the thermal hose assembly 38 has an inlet fitting 38a and an outlet fitting 38b disposed extending into the cover 44b in a center of the sub pack 22. FIG. 13 is a detailed perspective view of an exemplary thermal hose assembly 38 with the inlet and outlet fittings 38a, 38b and additional fittings 38c for connecting to the inlet fittings of the cold plate structural assemblies 40, 140 and fitting 38d for connection to the outlet fittings of the cold plate structural assemblies 40, 140. Thermal hose assembly 38 may further include additional deaeration valves 38e provided for releasing air from the thermal hose assembly 38. The thermal hose assembly 38 can take on other forms or configurations.

With reference to FIG. 5, the internal frame assembly 34 is shown with the box frame 24 and the battery modules 36 removed. The internal frame assembly 34 includes three cold plate structures 40a on one side, three middle cold plate structures 40b and three cold plate structures 40c on the other side. It should be understood that, in other examples, the number of cold plate structures 40a, 40b, 40c may vary. Front and rear vertical support brackets 46a-46c are provided for connection to the front and rear of a center edge portion of each cold plate structure 40a-40c, respectively. Additional vertical front support brackets 48a, 48b are provided between the center cold plates 40b and the outer cold plates 40a, 40c, respectively. Fore and aft support beams 50a-50c extend between and are connected to the front and rear support brackets 48a, 48b. The fore-aft beams 50a, 50b can be connected to the support brackets 48a, 48b by inter-engagement features, fasteners, or other known fastening techniques.

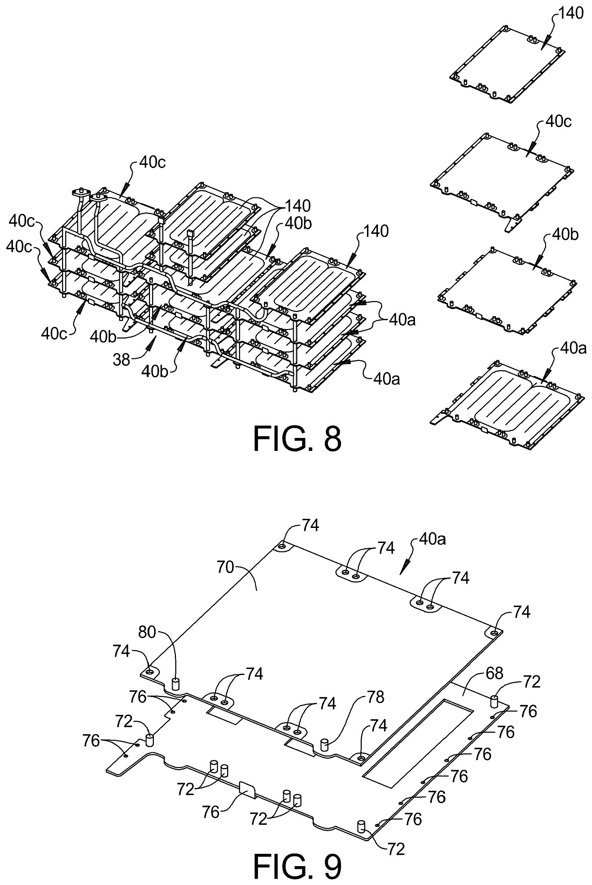

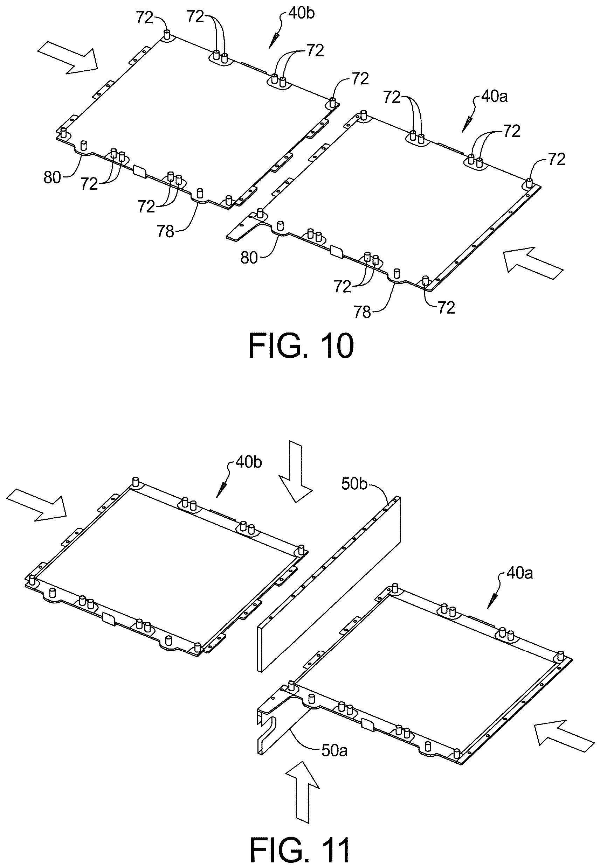

A top plate assembly 52 is provided on top of the internal frame assembly 34. An additional cold plate structure 140 is provided on top of the top plate assembly 52 at one end and a pair of stacked cold plate structures 140 are stacked on a middle portion of the top plate assembly 52. Each cold plate structure 40a-40c, 140 can have one or multiple battery modules 36, 136 stored thereon. FIG. 8 shows the cold plate structures 40a-40c and the additional cold plate structures 140 with the thermal hose assembly 38 connected thereto. FIG. 11 shows an interface between the fore aft support beams 50a, 50b and the cold plate structural assemblies 40a, 40b. FIG. 12 is a detailed perspective view of the assembly of the cold plate structural assemblies 40a, 40b and fore aft support beams 50a, 50b according to the principles of the present disclosure.

With reference to FIG. 6, the rear wall 28 and the pair of side walls 30a, 30b each include mounting flanges 54 vertically spaced there along with mounting apertures for mounting the cold plate structures 40a-40c thereto. As shown in FIG. 6, the three cold plate structures 40a are mounted to the vertically spaced mounting flanges 54 on the rear wall 28 and one sidewall 30a and to the fore and aft support beams 50a-50c on one side of the box frame 24, the three middle cold plate structures 40b are mounted to the vertically spaced mounting flanges 54 on the rear wall and to the fore and aft support beams 50a-50c and the three cold plate structures 40c are mounted to the vertically spaced mounting flanges 54 on the rear wall 28 and the other sidewall 30b and to the fore and aft support beams 50a-50c on the other side of the box frame 24 using threaded or other fasteners 55. The cold plate structures 40a-40c are also connected to the front vertical support brackets 46a-46c, respectively. The top plate assembly 52 is mounted along the perimeter of the top of the box frame 24 with threaded or other fasteners 55.

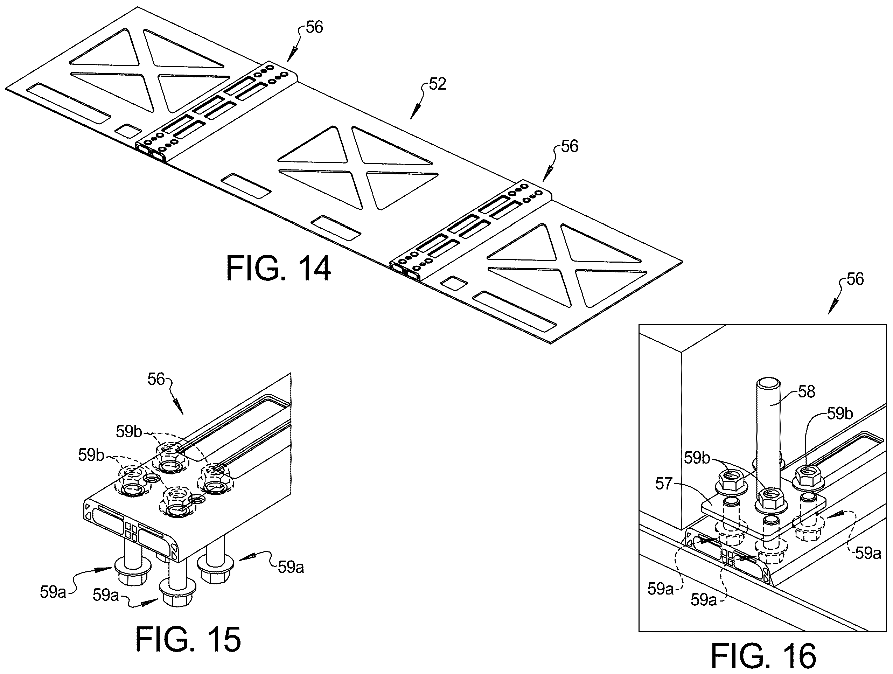

The front wall 26 of the box frame 24 can include a rectangular frame structure 26a and a wall panel 26b that is removably mounted to the frame structure 26a. During assembly, the wall panel 26b is removed to allow for connection of the cold plate structures 40a-40c to the support brackets 46a-46c and to allow the installation of the thermal hose assembly 38 for connection to the cold plate structures 40a-40c. Two of the additional cold plate structures 140 are mounted to the top plate assembly and additional battery modules136 are stacked on the two additional cold plates structures 140. Optionally, an additional staked upper cold plate structure 140 is disposed above the additional battery module 136 in a center of the top plate assembly 52 and at least one additional battery module 136 is disposed on the additional upper cold plate structure 140. The battery control unit 42 is mounted to the top plate assembly 52. The covers 44a-44c are mounted to the top plate assembly 52 over the additional battery modules 136 and the battery control unit 42. A pair of mounting beam assemblies 56 are provided for mounting the sub pack 22 to the frame rails 12a, 12b of the vehicle 8. The pair of mounting beam assemblies 56 are mounted to the box frame 24 and include mounting bolts 58 for mounting to the frame rails 12a, 12b. FIG. 14 is a perspective view of the top plate assembly and the mounting beam assemblies according to the principles of the present disclosure;

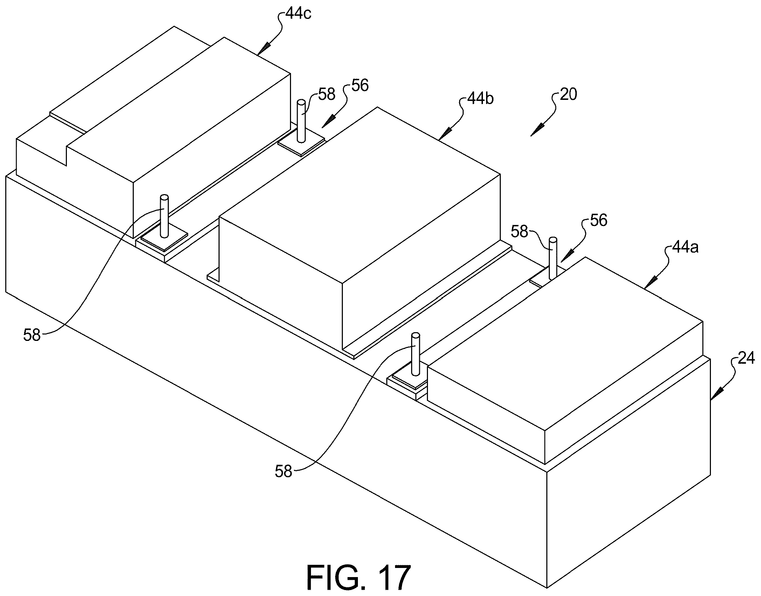

FIG. 15 is a perspective view of an end of the mounting beam assembly 56 with mounting bolts for the mounting plate. FIG. 16 is a perspective view of the mounting plate 57 and mounting bolt 58 shown being assembled to the mounting beam assembly 56 by the nut and bolt assemblies 59a, 59b. FIG. 17 is a schematic view of the sub pack showing details of the mounting beam assemblies 56 and mounting bolts 58 for mounting the sub pack 20 to the vehicle frame rails 12a, 12b.

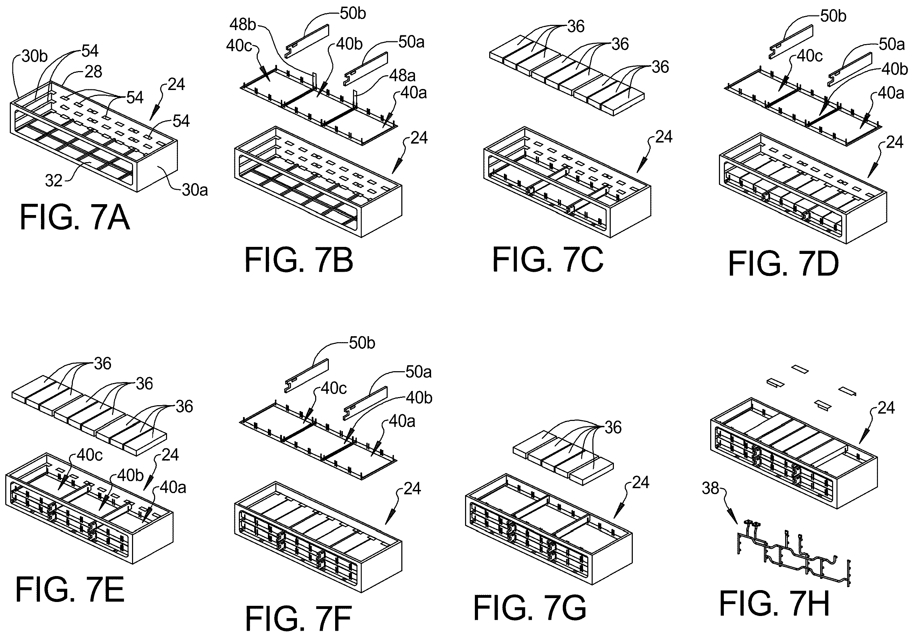

With reference to FIGS. 7A-7P, the step-by-step assembly of a sub pack 22 according to the principles of the present disclosure will now be described. FIG. 7A shows a box frame assembly 24 shown with the front panel 26b removed from the front frame 26a. The vertically spaced mounting flanges 54 on the rear wall 28 and sidewalls 30a, 30b are shown.

FIG. 7B shows a first layer of cold plate structures 40a-40c being inserted into the box frame 24 along with two fore-aft support beams 50a, three front support brackets 46a-46c and two rear support brackets 48b.

FIG. 7C shows a first layer of battery modules 36 being inserted into the box frame 24on top of the first layer of cold plate structures 40a-40c. Nine battery modules are shown although more or fewer battery modules could be used.

FIG. 7D shows a second layer of cold plate structures 40a-40c being inserted into the box frame 24 along with a second layer of two fore-aft support beams 50a.

FIG. 7E shows a second layer of battery modules 36 being inserted into the box frame 24 on top of the second layer of cold plate structures 40a-40c. Nine battery modules 36are shown although more or fewer battery modules 36 could be used.

FIG. 7F shows a third layer of cold plate structures 40a-40c being inserted into the box frame 24 along with a third layer of two fore-aft support beams 50a.

FIG. 7G shows the insertion of five battery modules 36 on top of the third layer of cold plate structures 40a-40c.

FIG. 7H shows the installation of mounting reinforcement 60 of the mounting beam assemblies 56. In addition, a thermal hose assembly is shown for being connected to the cold plate structures 40a-40c within the box frame.

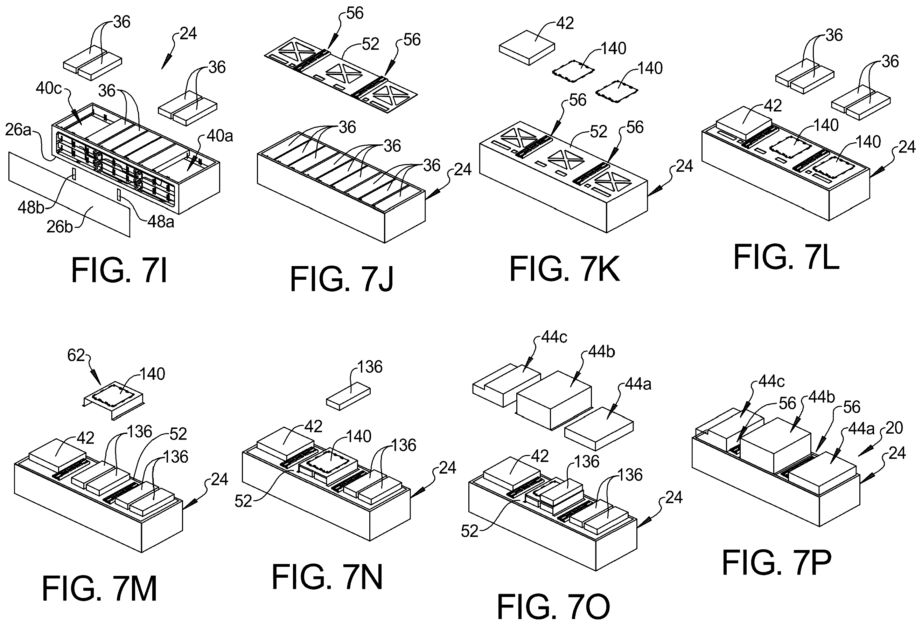

FIG. 7I shows the installation of the two front support brackets 48a to the front wall frame 26a, installing four additional battery modules 36 within the box frame and installing the front panel 26b to the front wall frame 26a.

FIG. 7J shows installation of the top plate assembly 52 and the mounting beam assemblies 56 to the box frame 24.

FIG. 7K shows installation of the battery control unit 42 and two additional cold plate structures 140 to the top plate assembly 52.

FIG. 7L shows installation of four additional battery modules 136 on the additional cold plate structures 140.

FIG. 7M shows installation of a top shelf assembly 62 including an additional cold plate structure 140 to the top plate assembly 52.

FIG. 7N shows installation of an additional battery module 136 to the cold plate structure 140 of the top shelf assembly 62. One battery module 136 is shown although more battery modules can be mounted to the top shelf assembly 62.

FIG. 7O shows installation of three cover assemblies 44a-44c to the top plate assembly 52.

FIG. 7P shows the fully assembled sub pack 22 according to the principles of the present disclosure.

FIG. 9 is an exploded perspective view of an example cold plate structural assembly 40 according to the principles of the present disclosure. The cold plate structural assembly 40 includes a structural plate 68 and a cold plate 70 secured to the structural plate 68. In some cases, the cold plate 70 may be secured to the structural plate 68 using adhesive tape. The structural plate 68 includes a plurality of alignment pins 72 and the cold plate 70 includes a plurality of apertures 74 that receive the alignment pins 72. In some cases, the alignment pins 72 may be received by the apertures 74 to ensure proper positioning of the cold plate 70 on the structural plate 68. The structural plate 68 includes a plurality of mounting features 76 for mounting to the mounting flanges 54 on the interior of the box frame 24. The cold plate 68 can include a serpentine coolant flow path that is connected between an inlet fitting 78 and an outlet fitting 80. FIG. 10 is a perspective view of a pair of cold plate structural assemblies 40 according to the principles of the present disclosure.

The foregoing description of the embodiments has been provided for purposes of illustration and description. It is not intended to be exhaustive or to limit the disclosure. Individual elements or features of a particular embodiment are generally not limited to that particular embodiment, but, where applicable, are interchangeable and can be used in a selected embodiment, even if not specifically shown or described. The same may also be varied in many ways. Such variations are not to be regarded as a departure from the disclosure, and all such modifications are intended to be included within the scope of the disclosure.

## Claims

1. A vehicle battery pack assembly, comprising:
a plurality of sub pack assemblies, each sub pack including:
a box frame;
an internal frame assembly disposed within the box frame; and
a plurality of first battery modules supported within the box frame by the internal frame assembly,
wherein the box frame includes a front wall, a rear wall and a pair of side walls, one of the front wall and the rear wall includes a first plurality of mounting flanges vertically spaced there along and the pair of sidewalls each include a second plurality of mounting flanges vertically spaced there along,
wherein the internal frame assembly includes a plurality of first cold plate structures mounted directly to at least one of the first and second plurality of mounting flanges; and
wherein a thermal hose assembly is connected to each of the plurality of first cold plate structures and the plurality of first battery modules are supported on the plurality of first cold plate structures.

2. The vehicle battery pack assembly according to claim 1, wherein the internal frame assembly further comprises a plurality of front vertical support brackets extending along the front wall and a plurality of rear vertical support brackets extending along the rear wall of the box frame and a plurality of support beams extending between respective ones of the plurality of front vertical support brackets and the plurality of rear vertical support brackets.

3. The vehicle battery pack assembly according to claim 2, wherein the plurality of first cold plate structures are connected to at least one of the plurality of support beams.

4. The vehicle battery pack assembly according to claim 1, wherein the internal frame includes a top plate mounted to an upper portion of the box frame.

5. The vehicle battery pack assembly according to claim 4, further comprising a plurality of second cold plate structures disposed on the top plate.

6. The vehicle battery pack assembly according to claim 5, further comprising a second plurality of battery modules disposed on the plurality of second cold plate structures.

7. The vehicle battery pack assembly according to claim 6, further comprising a plurality of covers covering the second plurality of battery modules.

8. The vehicle battery pack assembly according to claim 1, wherein the plurality of first cold plate structures include a structural plate and a cold plate secured to the structural plate.

9. The vehicle battery pack assembly according to claim 8, wherein the structural plate includes a plurality of alignment pins and the cold plate includes a plurality of apertures that receive the alignment pins.

10. The vehicle battery pack assembly according to claim 9, wherein the structural plate includes a plurality of mounting features for mounting to the first plurality of mounting flanges and the second plurality of mounting flanges.

11. An electric vehicle, comprising:
a vehicle frame structure including a pair of frame rails;
a plurality of sub pack assemblies each mounted the to the pair of frame rails,
each sub pack including:
a box frame;
an internal frame assembly disposed within the box frame; and
a plurality of first battery modules supported within the box frame by the internal frame assembly,
wherein the box frame includes a front wall, a rear wall and a pair of side walls, one of the front wall and the rear wall includes a first plurality of mounting flanges vertically spaced there along and the pair of sidewalls each include a second plurality of mounting flanges vertically spaced there along,
wherein the internal frame assembly includes a plurality of first cold plate structures mounted directly to at least one of the first and second plurality of mounting flanges; and
wherein a thermal hose assembly is connected to each of the plurality of first cold plate structures and the plurality of first battery modules are supported on the plurality of first cold plate structures.

12. The electric vehicle according to claim 11, wherein the internal frame assembly further comprises a plurality of front vertical support brackets extending along the front wall and a plurality of rear vertical support brackets extending along the rear wall of the box frame and a plurality of support beams extending between respective ones of the plurality of front vertical support brackets and the plurality of rear vertical support brackets.

13. The electric vehicle according to claim 12, wherein the plurality of first cold plate structures are connected to at least one of the plurality of support beams.

14. The electric vehicle according to claim 11, wherein the internal frame includes a top plate mounted to an upper portion of the box frame.

15. The electric vehicle according to claim 14, further comprising a plurality of second cold plate structures disposed on the top plate.

16. The electric vehicle according to claim 15, further comprising a second plurality of battery modules disposed on the plurality of second cold plate structures.

17. The electric vehicle according to claim 16, further comprising a plurality of covers covering the second plurality of battery modules.

18. The electric vehicle according to claim 11, wherein the plurality of first cold plate structures include a structural plate and a cold plate secured to the structural plate.

19. The electric vehicle according to claim 18, wherein the structural plate includes a plurality of alignment pins and the cold plate includes a plurality of apertures that receive the alignment pins.

20. The electric vehicle according to claim 19, wherein the structural plate includes a plurality of mounting features for mounting to the first plurality of mounting flanges and the second plurality of mounting flanges.
